# FASCICULE DE BREVET EUROPEEN

(11) **EP 0 389 340 B1**
(45) Date de publication et mention de la délivrance du brevet: **31.08.1994**
(21) Numéro de dépôt: 90400712.7
(22) Date de dépôt: 16.03.1990
(51) Int. Cl.: H04N 7/173

(54) **Dispositif de détection de fin de connexion à un programme payant reçu par un poste d'abonné via un réseau de télédistribution interactive**
Anordnung zum Auffinden eines Verbindungsendes an einer Gebührensendung, die eine Teilnehmerstation mittels eines interaktiven Fernmitteilungsnetzes empfängt
Device for detecting the end of a connection to a pay programme received by a subscriber terminal via an interactive teledistribution network

(30) Priorité: 21.03.1989 FR 8903672
(43) Date de publication de la demande: 26.09.1990
(73) Titulaire: THOMSON multimedia, 92400 Courbevoie (FR)
(72) Inventeur: Pham van Cang, Luc, F-92402 Courbevoie Cédex (FR)
(74) Mandataire: Chaverneff, Vladimir

(56) Documents cités:
- US-A- 3 580 989
- US-A- 4 044 376
- US-A- 4 207 431

## Description

La présente invention se rapporte à un dispositif de détection de fin de connexion à un programme payant reçu par un poste d'abonné via un réseau de télédistribution interactive.

La distribution interactive par câble de signaux à vidéofréquences depuis un centre distributeur, formant la tête d'un réseau étoilé, vers des abonnés munis chacun d'un terminal relié à ce câble est une technique qui repose sur la transmission vers le centre distributeur de demandes de connexion formulées à distance par les abonnés. Ces demandes peuvent être gérées par un micro-ordinateur commandant une grille de commutation capable d'établir des connexions entre chaque départ de câble et chaque source d'informations disponible dans le centre distributeur. La demande est acheminée vers le centre distributeur par le câble de liaison qui relie ce centre au terminal d'abonné et qui sert principalement à transmettre vers l'abonné les signaux vidéo correspondant au programme sélectionné.

La connexion du câble d'abonné aux sources de programmes peut également se faire de la façon décrite dans le brevet français FR-A-2 644 961 déposé par la Demanderesse le même jour que la présente demande, publié le 28/09/90 et équivalent à la demande EP-A-0 389 339 et intitulé : "Réseau de distribution interactive d'informations vidéo, audio et télématiques". En bref, cette autre façon de faire consiste à utiliser dans le centre distributeur un module de commutation pour chaque abonné, ce module renfermant un multiplexeur à p voies d'entrée et une voie de sortie, et un récepteur de télécommande destiné à sélectionner l'une des P voies véhiculant les programmes des sources d'informations. Dans ce cas, le micro-ordinateur du centre distributeur scrute les modules pour connaître les états de raccordement en vue de facturer les services rendus par le réseau de distribution et, le ces échéant, il procède autoritairement à des modifications de connexions lorsque l'abonné effectue un choix auquel il n'a pas droit. La demande de l'abonné est transmise par le câble qui le relie individuellement au centre distributeur, et le micro-ordinateur dispose de l'information relative à la connexion établie entre le câble d'abonné et la source d'informations correspondant au choix qu'il a exprimé. Cette demande partage le câble avec les signaux vidéo sans provoquer d'interférences, grâce à l'utilisation d'une porteuse modulée par le message codé qui représente cette demande. Cette porteuse a une fréquence proche du gabarit de fréquences des signaux vidéo diffusés par le système de télédistribution pour alimenter par exemple un téléviseur situé chez l'abonné ou n'importe quel autre dispositif électronique audio, vidéo ou télématique capable de traiter ces signaux.

Le terminal d'abonné comprend un clavier associé à un émetteur de télécommande et à des moyens permettant d'appliquer sur le câble de liaison des informations dans une forme apte à être reçue par l'équipement correspondant du centre distributeur.

Le centre de distribution a pour tâche, entre autres, de comptabiliser les accès aux sources d'information en fonction d'éléments tels que la nature du programme sélectionné, la durée de raccordement et la tranche horaire. Pour cela, il ne suffit pas qu'une demande de connexion soit exécutée, car depuis la dernière demande l'abonné a pu cesser d'exploiter le programme qui lui est diffusé. L'abonné peut par exemple être convié à formuler une demande de connexion gratuite après chaque phase d'utilisation d'un programme payant, mais il peut oublier de le faire, notamment lorsqu'il quitte le réseau de télédistribution pour exploiter une autre source de signal (programmes de télévision diffusée par ondes hertziennes, jeux vidéo personnels,...). Les équipements destinés à recevoir les signaux télédistribués chez l'abonné sont d'un modèle standard et ne disposent pas de moyens de répercuter au centre distributeur un statut de fonctionnement que celui-ci puisse prendre en compte pour éviter toute facturation indue.

La présente invention a pour objet un dispositif qui permette, dans un réseau de télédistribution du type à câblage en étoile à partir d'un centre de distribution, de détecter automatiquement et le plus rapidement possible la fin de la connexion de tout abonné à une source de programmes payants, ce dispositif étant le moins onéreux possible, et le plus simple possible à installer.

La présente invention a également pour objet un procédé d'exonération de l'usager d'un réseau câblé de distribution de signaux à vidéofréquences, procédé qui permette à l'usager, dès qu'il ne veut plus recevoir de programme en provenance du centre distributeur, et veut passer à la réception d'un programme diffusé par ondes hertziennes, d'effectuer cette manoeuvre le plus simplement possible sans risque d'être facturé par ce centre lorsqu'il reçoît ledit programme diffusé par ondes hertziennes.

Le dispositif conforme à l'invention comporte, dans le terminal de chaque abonné, un générateur d'onde porteuse , un dispositif de détection de fonctionnement d'appareil raccordé au terminal pour recevoir des programmes, notamment ceux diffusés par le centre de distribution, un circuit à porte commandé par le circuit détecteur de fonctionnement et interposé entre le générateur d'onde porteuse et l'arrivée du câble de liaison au centre de distribution, et dans le centre de distribution un dispositif détecteur de l'onde porteuse et un moyen de sélection de programme utilisable gratuitement, commandé par ce dispositif détecteur.

Selon une autre caractéristique de l'invention, un terminal d'abonné comporte un dispositif détecteur de signal de programme transmis par le centre de distribution, ce dispositif étant relié à un dispositif inverseur établissant la liaison prioritaire entre le dispositif récepteur de l'abonné et le centre distributeur tant que ce dernier transmet un programme à l'abonné, le centre distributeur étant prévu avec un canal fantôme à utilisation gratuite auquel doit se raccorder l'abonné pour faire commuter l'inverseur en vue de capter via ledit terminal un programme distinct de ceux qui sont véhiculables par le réseau.

Le procédé d'exonération conforme à l'invention est caractérisé par le fait que tant que le terminal de l'usager reçoit un signal vidéo du centre distributeur, il envoie à ce dernier un signal de réception, et par le fait que lorsque ce terminal ne reçoit plus de signal vidéo du centre distributeur, il bloque ledit signal de réception, l'interruption de l'arrivée de ce signal de réception étant détectée par le centre distributeur, qui arrête alors la taxation de l'usager. Avantageusement, ledit signal de réception est une onde porteuse caractérisant par sa présence la marche d'un appareil d'utilisation raccordé au terminal. Selon un autre aspect du procédé de l'invention, ledit signal correspond au choix par l'usager d'un programme diffusé par le réseau, un autre choix impliquant que l'usager se fasse affecter au centre distributeur un canal gratuit dépourvu de ce signal.

La présente invention sera mieux comprise à la lecture de la description détaillée d'un mode de réalisation pris comme exemple non limitatif et illustré par le dessin annexé, sur lequel:
- la figure 1 est un bloc-diagramme partiel d'un réseau de télédistribution équipé d'un dispositif conforme à l'invention, et
- la figure 2 est un bloc-diagramme détaillé d'un terminal d'abonné du réseau de la figure 1.

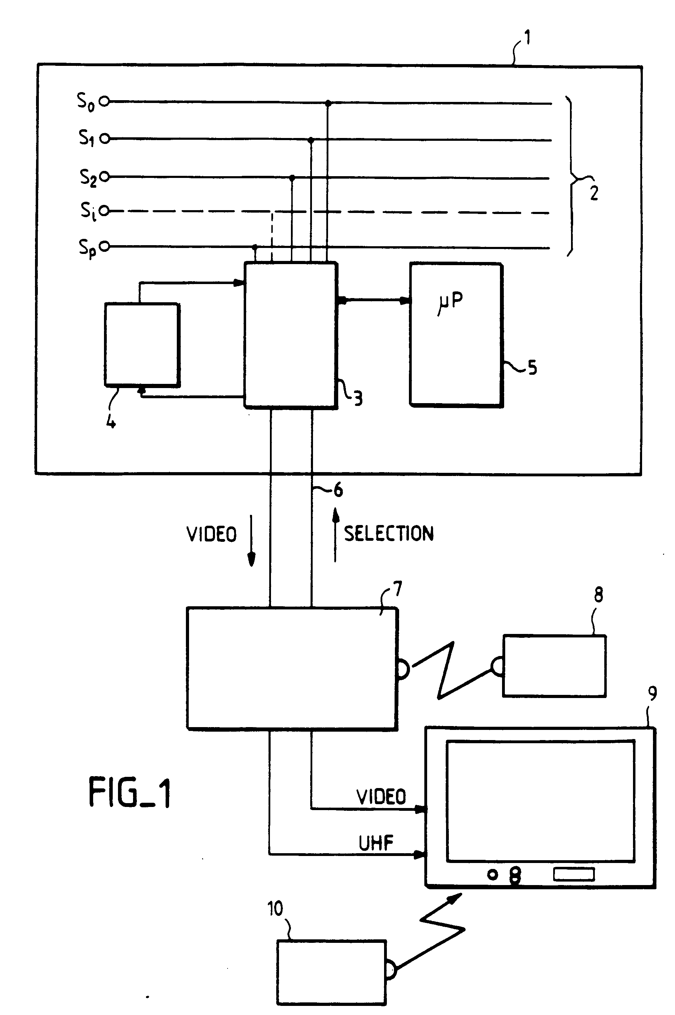

On a schématiquement représenté sur la figure 1 un centre de distribution 1, qui est, dans le présent exemple, conforme à celui décrit dans ladite demande de brevet de la Demanderesse,mais qui peut être d'un autre type connu. Le centre 1 diffuse en particulier des programmes vidéo,mais peut aussi bien diffuser des programmes audio ou télématiques. Ce centre 1 comporte essentiellement un bus 2, qui sera appelé par la suite bus vidéo par commodité, ce bus étant relié à P sources de programmes S1 à SP ainsi qu'à une source fantôme S0 (source à usage gratuit sans signal vidéo ou sans signal utile en général), et pour chaque abonné un module 3 amplificateur et sélecteur de sources. Le module 3 est relié, conformément à l'invention, à un dispositif 4 détecteur d'onde porteuse coopérant avec l'émetteur d'onde porteuse,décrit ci-dessous, se trouvant dans le terminal de l'abonné correspondant. Ce dispositif 4 force le module 3 à se connecter sur la source fantôme lorsqu'il détecte une absence de porteuse pendant un certain temps. Un micro-ordinateur 5 assure la gestion de centre 1, et en particulier vérifie la régularité des connexions obtenues par les abonnés et collecte les données nécessaires à la facturation.

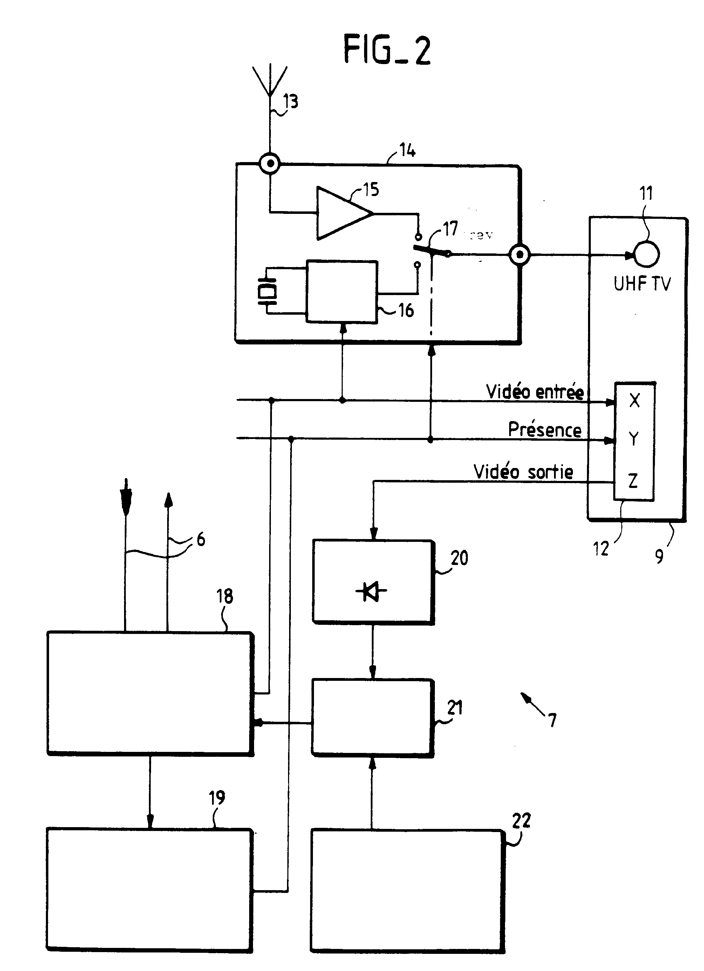

Chaque module 3 est relié à l'abonné correspondant par un câble de liaison 6 qui est par exemple une ligne bifilaire. Du côté de l'abonné, le câble 6 est relié à un terminal de réseau 7 décrit en détail ci-dessous en référence à la figure 2. L'abonné dispose d'un boîtier de télécommande 8 à infrarouge coopérant avec un dispositif de commande approprié du terminal 7 en vue de communiquer au centre 1 via le câble 6 ses demandes de connexion à une source déterminée. Le terminal 7 est relié à un appareil récepteur de programmes, qui est dans le cas présent un appareil de télévision 9. La liaison entre le terminal 7 et l'appareil 9 se fait, en standard, par une ligne vidéo et une ligne UHF, mais il est bien entendu que l'une d'elles peut suffire. L'abonné dispose également d'un autre boîtier de télécommande à infrarouge 10 coopérant avec le téléviseur 9 pour la sélection des programmes reçus par ondes hertziennes et pour divers réglages courants de ce téléviseur.

On a schématiquement représenté en figure 2 les parties pertinentes du téléviseur 9, à savoir une prise UHF 11 et une prise "péritélévision" 12, ainsi qu'une antenne 13 captant des programmes de télévision diffusés par ondes hertziennes. Les autres blocs représentés en figure 2 font partie du terminal d'abonné 7 mentionné ci-dessus.

Le bloc 14 du terminal d'abonné renferme un amplificateur 15 relié à l'antenne 13 et un modulateur 16 qui sont alternativement reliés à la prise 11 du téléviseur à l'aide d'un inverseur commandé 17.

Le câble 6 est relié à un amplificateur de signal composite vidéo 18. Ce signal composite est appliqué à la fois au modulateur 16, à la borne "X" d'entrée vidéo de la prise 12 et à un circuit 19 de détection de signal vidéo. Le circuit 19 détecte la présence effective du signal vidéo composite arrivant au terminal 7 en détectant de façon bien connue en soi les impulsions de synchronisation de ce signal. Le signal de détection du circuit 19 commande le basculement de l'inverseur 17, et est envoyé à la borne "Y" de commutation lente de la prise 12. Ainsi, tant que le circuit 19 détecte la présence d'un signal composite, son signal de sortie force l'inverseur 17 à se raccorder au modulateur 16 et force le téléviseur à se brancher sur l'entrée X. On sait que la qualité de l'image d'un téléviseur est meilleure lorsqu'il reçoît directement un signal vidéo composite que lorsque ce signal composite est modulé par un modulateur puis démodulé par le démodulateur branché en aval de sa prise UHF (ou VHF). Pour cette raison, lorsqu'un téléviseur est équipé d'une prise de péritélévision, comme c'est le cas sur la figure 2, il est préférable d'envoyer les signaux de sortie de l'amplificateur 18 à la borne X d'une telle prise, et dans ce cas, le modulateur 16 peut être omis.

La borne "Z" de sortie vidéo de la prise 12 est reliée à un circuit 20 de détection de présence de signal vidéo. Le circuit 20 est relié à l'entrée de commande d'un circuit à porte 21. Le circuit 21 est disposé entre un circuit 22 émetteur de signaux de télécommande et l'amplificateur 18. Le circuit 22 émet en permanence une onde porteuse tant que le terminal 7 est en fonctionnement. Lorsque l'abonné manipule le boîtier de télécommande 10 pour sélectionner un programme du centre 1, il se produit une modulation de ladite onde porteuse. De préférence, cette modulation consiste en une suite de brèves interruptions de la porteuse (modulation négative). En variante, ou si le téléviseur n'est pas équipé de prise de péritélévision, le circuit 20 peut détecter de toute autre façon le fonctionnement effectif du téléviseur, par exemple en captant le courant d'alimentation du téléviseur.

Le terminal 7 étant en fonctionnement, tant que le circuit 19 détecte la présence d'un signal vidéo en provenance du centre 1, l'inverseur 17 ne peut être relié à l'amplificateur 15, et le téléviseur reçoît ce signal (soit via le modulateur 16 s'il na pas de prise 12, soit via la borne X). D'autre part, puisque le téléviseur reçoît ce signal, le circuit 21 est passant et la porteuse du circuit 22 parvient au détecteur 4 du centre 1. Le centre de distribution facture donc à l'abonné le programme reçu.

Dès que l'abonné ne veut plus recevoir de programme en provenance du centre distributeur, et veut passer à la réception d'un programme diffusé par ondes hertziennes, il ne peut le faire qu'en demandant au centre distributeur le branchement sur un canal fantôme. En effet, l'inverseur 17 ne peut basculer vers l'amplificateur 15 (ou vers toute autre source indépendante du centre 1) que lorsque l'amplificateur 18 ne reçoît plus aucun signal vidéo du centre distributeur 1, le circuit détecteur 19 libérant alors seulement l'inverseur 17. Bien entendu, le micro-ordinateur du centre distributeur détecte alors la connexion du module de l'abonné sur une source fantôme et arrête aussitôt la taxation de l'abonné. De même, lorsque l'abonné éteint le téléviseur, ou que ce téléviseur tombe en panne, le détecteur 20 bloque le circuit 21, la porteuse du cicuit 22 ne parvient plus au centre 1,et un canal fantôme est assigné à l'abonné.

## Revendications

1. Dispositif de détection de fin de connexion à un programme payant reçu par un poste d'abonné via un réseau de télédistribution interactive, caractérisé par le fait qu'il comporte, dans le terminal (7) de chaque abonné, un générateur (22) d'onde porteuse, un dispositif (20) de détection de fonctionnement d'appareil raccordé au terminal pour recevoir des programmes, notamment ceux diffusés par le centre de distribution, un circuit à porte (21) commandé par le circuit détecteur de fonctionnement et interposé entre le générateur d'onde porteuse et l'arrivée (18) du câble de liaison (6) au centre de distribution (1), et dans le centre de distribution un dispositif (4) détecteur de l'onde porteuse et un moyen (3) de sélection de programme utilisable gratuitement, commandé par ce dispositif détecteur.

2. Dispositif selon la revendication 1, caractérisé par le fait qu'un terminal d'abonné comporte un dispositif (19) détecteur de signal de programme transmis par le centre de distribution, ce dispositif étant relié à un dispositif (17) inverseur établissant la liaison prioritaire entre le dispositif récepteur (9) de l'abonné et le centre distributeur tant que ce dernier transmet un programme à l'abonné, le centre distributeur comprenant un canal fantôme à utilisation gratuite auquel doit se raccorder l'abonné pour faire commuter l'inverseur en vue de capter via ledit terminal un programme distinct de ceux qui sont véhiculables par le réseau.

3. Dispositif selon la revendication 1 ou 2, caractérisé par le fait que l'onde porteuse sert à transmettre un signal de télécommande (8) par une modulation négative.

4. Dispositif selon l'une des revendications précédentes caractérisé par le fait que le dispositif détecteur de fonctionnement d'appareil récepteur réagit au courant d'alimentation de cet appareil.

5. Dispositif selon l'une des revendications 1 à 3, caractérisé par le fait que le dispositif détecteur de fonctionnement d'appareil récepteur, lorsque cet appareil est muni d'une prise de péritélévision, est relié à la borne de sortie vidéo de cette prise.

6. Procédé d'exonération de l'usager d'un réseau câblé de distribution de signaux à vidéofréquences, le réseau comportant un centre de distribution (1) relié par bus (2) à plusieurs sources de programmes à péage (S1 à SP) ainsi qu'à une source à usage gratuit (S0) sans signal vidéo, caractérisé par le fait que tant que le terminal de l'usager reçoit un signal vidéo du centre distributeur, il envoie à ce dernier un signal de réception, et par le fait que lorsque ce terminal ne reçoit plus de signal vidéo du centre distributeur, il bloque ledit signal de réception, l'interruption de l'arrivée de ce signal de réception étant détectée par le centre distributeur, qui arrête alors la taxation de l'usager.

7. Procédé selon la revendication 6, caractérisé par le fait que ledit signal de réception est une onde porteuse.

8. Procédé selon la revendication 6 ou 7, caractérisé par le fait que ledit signal de réception correspond au choix par l'usager d'un programme diffusé par le réseau, un autre choix impliquant que l'usager se fasse affecter au centre distributeur un canal gratuit dépourvu de ce signal de réception.

9. Procédé selon la revendication 6 ou 7, caractérisé par le fait que ledit signal de réception n'est plus émis lorsque l'utilisateur éteint le récepteur (9) de signaux vidéofréquences ou que ce récepteur tombe en panne.

## Patentansprüche

1. Vorrichtung zur Erfassung des Endes eines Anschlusses an ein gebührenpflichtiges Programm, das von einem Teilnehmergerät über ein interaktives Fernsehverteilnetz empfangen wird, dadurch gekennzeichnet, daß in dem Endgerät (7) jedes Teilnehmers ein Trägerwellengenerator (22), eine Vorrichtung (20) zur Erfassung des Betriebszustands des an das Endgerät angeschlossenen und für den Empfang der Programme, insbesondere der vom Fernsehverteilzentrum verbreiteten Programme, und eine Torschaltung (21) vorgesehen sind, die von der Schaltung zur Erfassung des Betriebszustands gesteuert wird und zwischen dem Trägerwellengenerator und dem Kabelende (18) der Verbindung (6) mit dem Verteilzentrum (1) eingefügt ist, und daß im Verteilzentrum eine Vorrichtung (4) zur Erfassung der Trägerwelle und ein von dieser Vorrichtung gesteuertes Mittel (3) zur Auswahl eines kostenfrei verfügbaren Programms vorgesehen sind.

2. Vorrichtung nach Anspruch 1, dadurch gekennzeichnet, daß ein Teilnehmerendgerät eine Vorrichtung (19) zur Erfassung eines von dem Verteilzentrum übertragenen Programmsignals besitzt, wobei diese Vorrichtung an eine Schaltvorrichtung (17) angeschlossen ist, die prioritär die Verbindung zwischen der Empfangsvorrichtung (9) des Teilnehmers und dem Verteilzentrum herstellt, solange letzteres ein Programm an den Teilnehmer überträgt, wobei das Verteilzentrum einen kostenlos verfügbaren Phantomkanal enthält, an den der Teilnehmer sich anschließen muß, um über das Endgerät ein von den durch das öffentlich Netz übertragbaren Programmen unterschiedliches Programm zu empfangen.

3. Vorrichtung nach Anspruch 1 oder 2, dadurch gekennzeichnet, daß die Trägerwelle der Übertragung eines Fernsteuersignals (8) mittels einer negativen Modulation dient.

4. Vorrichtung nach einem der vorhergehenden Ansprüche, dadurch gekennzeichnet, daß die den Betriebszustand des Empfangsgeräts erfassende Vorrichtung auf den Speisestrom dieses Geräts anspricht.

5. Vorrichtung nach einem der Ansprüche 1 bis 3, dadurch gekennzeichnet, daß die den Betrieb des Empfangsgeräts erfassende Vorrichtung an die Viodeausgangsklemme eines Fernsehzusatzanschlusses angeschlossen ist, wenn das Gerät einen solchen Anschluß besitzt.

6. Verfahren zur Gebührenerfassung des Verbrauchers eines Kabelnetzes, über das Videofrequenzsignale verteilt werden, wobei das Netz ein Verteilzentrum (1) aufweist, das über einen Bus (2) an mehrere gebührenpflichtige Programmquellen (S1 bis SP) sowie an eine kostenlos verfügbare Quelle ohne Videosignal (SO) angeschlossen ist, dadurch gekennzeichnet, daß das Verbraucher-Endgerät an das Verteilzentrum ein Empfangssignal sendet, solange es ein Videosignal vom Verteilzentrum empfängt, und daß das Verbraucher-Endgerät das Empfangssignal sperrt, wenn das Endgerät kein Videosignal mehr vom Verteilzentrum empfängt, worauf die Unterbrechung des Eintreffens dieses Empfangssignals vom Verteilzentrum erfaßt wird, das dann den Gebührenzähler des Verbrauchers anhält.

7. Verfahren nach Anspruch 6, dadurch gekennzeichnet, daß das Empfangssignal eine Trägerwelle ist.

8. Verfahren nach Anspruch 6 oder 7, dadurch gekennzeichnet, daß das Empfangssignal der Wahl eines über das Netz verteilten Programms durch den Verbraucher entspricht, während eine andere Wahl bedeutet, daß der Verbraucher sich vom Verteilzentrum einen kostenlos verfügbaren Kanal zuteilen läßt, das dieses Empfangssignal nicht enthält.

9. Verfahren nach Anspruch 6 oder 7, dadurch gekennzeichnet, daß das Empfangssignal nicht mehr ausgesendet wird, wenn der Verbraucher den Viodefrequenz-Signalempfänger (9) ausschaltet oder wenn dieser Empfänger ausfällt.

## Claims

1. Device for detecting termination of connection to a programme to be paid for, received by a subscriber unit via an interactive remote distribution network, characterized in that it comprises, in the terminal (7) of each subscriber, a carrier wave generator (22), a device (20) for detecting operation of a set linked to the terminal for receiving programmes, in particular those broadcast by the distribution centre, a gated circuit (21) controlled by the operation detector circuit and interposed between the carrier wave generator and the entry (18) of the connection cable (6) to the distribution centre (1), and in the distribution centre a device (4) detecting the carrier wave and a freely usable programme selection means (3) controlled by this detector device.

2. Device according to Claim 1, characterized in that a subscriber terminal comprises a device (19) detecting a programme signal transmitted by the distribution centre, this device being connected to an inverting device (17) establishing the priority connection between the subscriber's receiving device (9) and the distribution centre as long as the latter transmits a programme to the subscriber, the distribution centre including a free-use shadow channel to which the subscriber must link up in order to switch the inverter with a view to picking up through the said terminal a programme distinct from those which are able to be carried by the network.

3. Device according to Claim 1 or 2, characterized in that the carrier wave serves to transmit a remote control signal (8) by negative modulation.

4. Device according to one of the preceding claims, characterized in that the device detecting operation of a receiving set reacts to the current for supplying this set.

5. Device according to one of Claims 1 to 3, characterized in that the device detecting operation of a receiving set, when this set is provided with an adaptor for television peripherals, is connected to the video output terminal of this adaptor.

6. Process for exempting the user of a cabled network for distributing video frequency signals, the network including a distribution centre (1) connected by a bus (2) to several pay-programme sources (S1 to SP) and to a free-use source (S0) with no video signal, characterized in that as long as the user's terminal receives a video signal from the distribution centre, it sends the latter a reception signal, and in that when this terminal no longer receives a video signal from the distribution centre, it blocks the said reception signal, the interruption of the entry of this reception signal being detected by the distribution centre, which then halts the charging of the user.

7. Process according to Claim 6, characterized in that the said reception signal is a carrier wave.

8. Process according to Claim 6 or 7, characterized in that the said reception signal corresponds to the choice by the user of a programme broadcast by the network, another choice implying that the user gets himself allocated to the distribution centre a free channel devoid of this reception signal.

9. Process according to Claim 6 or 7, characterized in that the said reception signal is no longer emitted when the user turns off the receiver (9) of video frequency signals or when this receiver breaks down.
